# EUROPEAN PATENT APPLICATION

(11) **EP 4 642 140 A1**
(43) Date of publication of application: **29.10.2025**
(21) Application number: 24171929.3
(22) Date of filing: 23.04.2024
(51) Int. Cl.: H04W 74/0833, H04B 7/06

(54) **APPARATUS, METHOD AND COMPUTER PROGRAM FOR PERFORMING A RANDOM ACCESS PROCEDURE**

(71) Applicant: Nokia Technologies Oy, 02610 Espoo (FI)
(72) Inventor: GOUDA, Bikshapathi, 90570 Oulu (FI); ARVOLA, Antti, 90570 Oulu (FI); TÖLLI, Antti, 90650 Oulu (FI); HAKOLA, Sami-Jukka, 90450 Kempele (FI); KOSKELA, Timo, 90670 Oulu (FI); KARJALAINEN, Juha Pekka, 88600 Sotkamo (FI)
(74) Representative: Page White Farrer

(57) **Abstract**

There is provided an apparatus comprising means for obtaining information related to a physical random access channel, PRACH, configuration, receiving, from at least one transmit receive point, a plurality of synchronization reference signals, selecting at least two synchronization reference signals from the plurality of received synchronization reference signals, determining a beamformer based on the selected at least two synchronization reference signal and performing PRACH transmission based on the PRACH configuration and the determined beamformer.

## Description

### Field

The present application relates to a method, apparatus, system and computer program and in particular but not exclusively to network-assisted UE transmission to enhance the UL coverage during PRACH transmission.

### Background

A communication system can be seen as a facility that enables communication sessions between two or more communication devices, or provides communication devices access to a network. A mobile or wireless communication network is one example of a communication network. A communication device may be provided with a service by an application server.

Such communication networks operate in according with standards such as those provided by 3GPP (Third Generation Partnership Project) or ETSI (European Telecommunications Standards Institute). Examples of standards are the so-called 4G (4th Generation), 5G (5th Generation), 6G (6^{th} Generation) standards provided by 3GPP.

### Summary

In a first aspect there is provided an apparatus comprising means for obtaining information related to a physical random access channel, PRACH, configuration, receiving, from at least one transmit receive point, a plurality of synchronization reference signals, selecting at least two synchronization reference signals from the plurality of received synchronization reference signals, determining a beamformer based on the selected at least two synchronization reference signal and performing PRACH transmission based on the PRACH configuration and the determined beamformer.

The information related to the PRACH configuration may comprise an indication of at least one association between a set of random access preambles and a set of synchronization reference signals. The apparatus may comprise means for determining a random access preamble for PRACH transmission based on the received indication.

The information related to the PRACH configuration may comprise an indication that PRACH transmission is to be based on at least one of the following: two or more synchronization reference signals, a first signal condition, or a second signal condition.

The first signal condition may comprise a received signal quality threshold.

Means for selecting at least two synchronization reference signals may comprise means for selecting at least one of the at least two synchronization reference signals from the plurality of received reference signals based on the first signal condition.

The second signal condition may comprise a received signal quality range. The means for selecting at least two synchronization reference signals may comprise means for selecting a first synchronisation reference which has a highest received signal quality and at least one second synchronisation reference signal having a received signal quality within the received signal quality range of the highest received signal quality.

The information related to the PRACH configuration may comprise an indication of PRACH transmission type, wherein the type defines whether a single or multiple PRACH transmissions target to directions of the at least two synchronization reference signals.

Means for performing PRACH transmission may comprise means for performing multiple PRACH transmissions with at least one of time domain multiplexing, frequency domain multiplexing, or code domain multiplexing.

Means for performing PRACH transmission may comprise means for performing a single PRACH transmission to the directions of the at least two synchronization reference signals.

The information related to the PRACH configuration may comprise a number of PRACH transmissions.

The plurality of synchronization reference signals may be received from one transmit receive point.

The plurality of synchronization reference signals may be received from a plurality of transmit receive points, wherein the plurality of synchronization reference signals comprises the same synchronization reference signal received from a plurality of directions corresponding to the plurality of transmit receive points or multiple synchronization reference signals received from the plurality of directions.

The synchronization reference signal may comprise a synchronisation signal block.

In a second aspect there is provided an apparatus comprising means for sending, to a user equipment, information related to a physical random access channel, PRACH, configuration, transmitting a plurality of synchronization reference signals and receiving beamformed PRACH transmission from the user equipment, the beamformed PRACH transmission based on the PRACH configuration and the plurality of synchronisation reference signals.

The information related to the PRACH configuration may comprise an indication of at least one association between a set of random access preambles and a set of synchronization reference signals.

The information related to the PRACH configuration may comprise an indication that PRACH transmission is to be based on at least one of the following: two or more synchronization reference signals, a first signal condition, or a second signal condition.

The first signal condition may comprise a received signal quality threshold.

The second signal condition may comprise a received signal quality range.

The information related to the PRACH configuration may comprise an indication of PRACH transmission type, wherein the type defines whether a single or multiple PRACH transmissions target to directions of at least two synchronization reference signals.

Means for receiving beamformed PRACH transmission may comprise means for receiving multiple PRACH transmissions with at least one of time domain multiplexing, frequency domain multiplexing, or code domain multiplexing.

Means for receiving beamformed PRACH transmission may comprise means for receiving a single PRACH transmission.

The information related to the PRACH configuration may comprise a number of PRACH transmissions.

The plurality of synchronization reference signals may be transmitted from one transmit receive point.

The plurality of synchronization reference signals may be transmitted from a plurality of transmit receive points, wherein the plurality of synchronization reference signals comprises the same synchronization reference signal transmitted from a plurality of directions corresponding to the plurality of transmit receive points or multiple synchronization reference signals transmitted from the plurality of directions.

The synchronization reference signal may comprise a synchronisation signal block.

In a third aspect there is provided a method comprising for obtaining information related to a physical random access channel, PRACH, configuration, receiving, from at least one transmit receive point, a plurality of synchronization reference signals, selecting at least two synchronization reference signals from the plurality of received synchronization reference signals, determining a beamformer based on the selected at least two synchronization reference signal and performing PRACH transmission based on the PRACH configuration and the determined beamformer.

The information related to the PRACH configuration may comprise an indication of at least one association between a set of random access preambles and a set of synchronization reference signals. The method may comprise determining a random access preamble for PRACH transmission based on the received indication.

The information related to the PRACH configuration may comprise an indication that PRACH transmission is to be based on at least one of the following: two or more synchronization reference signals, a first signal condition, or a second signal condition.

The first signal condition may comprise a received signal quality threshold.

Selecting at least two synchronization reference signals may comprise selecting at least one of the at least two synchronization reference signals from the plurality of received reference signals based on the first signal condition.

The second signal condition may comprise a received signal quality range. Selecting at least two synchronization reference signals may comprise selecting a first synchronisation reference which has a highest received signal quality and at least one second synchronisation reference signal having a received signal quality within the received signal quality range of the highest received signal quality.

The information related to the PRACH configuration may comprise an indication of PRACH transmission type, wherein the type defines whether a single or multiple PRACH transmissions target to directions of the at least two synchronization reference signals.

Performing PRACH transmission may comprise performing multiple PRACH transmissions with at least one of time domain multiplexing, frequency domain multiplexing, or code domain multiplexing.

Performing PRACH transmission may comprise performing a single PRACH transmission to the directions of the at least two synchronization reference signals.

The information related to the PRACH configuration may comprise a number of PRACH transmissions.

The plurality of synchronization reference signals may be received from one transmit receive point.

The plurality of synchronization reference signals may be received from a plurality of transmit receive points, wherein the plurality of synchronization reference signals comprises the same synchronization reference signal received from a plurality of directions corresponding to the plurality of transmit receive points or multiple synchronization reference signals received from the plurality of directions.

The synchronization reference signal may comprise a synchronisation signal block.

In a fourth aspect there is provided a method comprising sending, to a user equipment, information related to a physical random access channel, PRACH, configuration, transmitting a plurality of synchronization reference signals and receiving beamformed PRACH transmission from the user equipment, the beamformed PRACH transmission based on the PRACH configuration and the plurality of synchronisation reference signals.

The information related to the PRACH configuration may comprise an indication of at least one association between a set of random access preambles and a set of synchronization reference signals.

The information related to the PRACH configuration may comprise an indication that PRACH transmission is to be based on at least one of the following: two or more synchronization reference signals, a first signal condition, or a second signal condition.

The first signal condition may comprise a received signal quality threshold.

The second signal condition may comprise a received signal quality range.

The information related to the PRACH configuration may comprise an indication of PRACH transmission type, wherein the type defines whether a single or multiple PRACH transmissions target to directions of at least two synchronization reference signals.

Receiving beamformed PRACH transmission may comprise receiving multiple PRACH transmissions with at least one of time domain multiplexing, frequency domain multiplexing, or code domain multiplexing.

Receiving beamformed PRACH transmission may comprise receiving a single PRACH transmission.

The information related to the PRACH configuration may comprise a number of PRACH transmissions.

The plurality of synchronization reference signals may be transmitted from one transmit receive point.

The plurality of synchronization reference signals may be transmitted from a plurality of transmit receive points, wherein the plurality of synchronization reference signals comprises the same synchronization reference signal transmitted from a plurality of directions corresponding to the plurality of transmit receive points or multiple synchronization reference signals transmitted from the plurality of directions.

The synchronization reference signal may comprise a synchronisation signal block.

In a fifth aspect there is provided an apparatus comprising at least one processor, and at least one memory storing instructions which, when executed by the processor, cause the apparatus at least to perform the method according to the third or fourth aspect.

In a sixth aspect there is provided a computer readable medium comprising instructions which, when executed by an apparatus, cause the apparatus to perform at least the method according to the third or fourth aspect.

In a seventh aspect there is provided a non-transitory computer readable medium comprising program instructions for causing an apparatus to perform at least the method according to the third or fourth aspects.

In the above, many different embodiments have been described. It should be appreciated that further embodiments may be provided by the combination of any two or more of the embodiments described above.

### Description of Figures

Embodiments will now be described, by way of example only, with reference to the accompanying Figures in which:
Figure 1 shows a schematic diagram of an example 5GS communication system;
Figure 2 shows a schematic diagram of an example mobile communication device;
Figure 3 shows a schematic diagram of an example control apparatus;
Figure 4 shows a flowchart of a method according to an example embodiment;
Figure 5 shows a flowchart of a method according to an example embodiment;
Figure 6a shows a schematic diagram of SSB transmission in a SFN manner in a multi-TRP cell;
Figure 6b shows a schematic diagram of SSB transmission in a per TRP manner manner in a multi-TRP cell;
Figure 7a shows a schematic diagram of beamformer definition based on a single SSB per time instance;
Figure 7b shows a schematic diagram of beamformer definition based on multiple SSBs per time instance;
Figure 8a shows a schematic diagram of RACH occasion allocation in time;
Figure 8b shows a schematic diagram of RACH occasion allocation in frequency;
Figure 8c shows a schematic diagram where a single RACH occasion addresses multiple SSBs.

### Detailed description

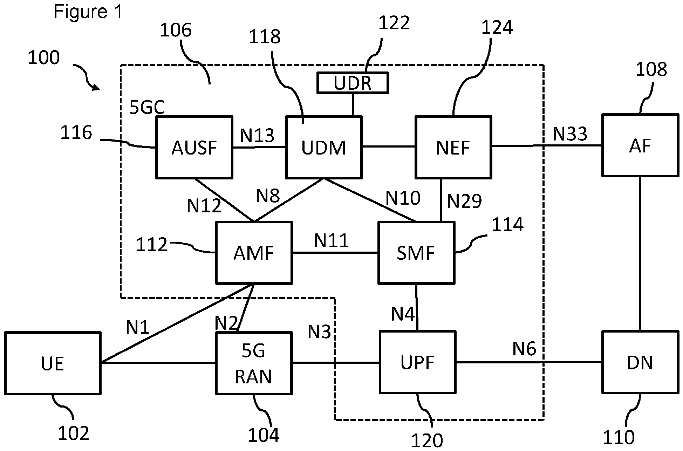

Before explaining in detail the examples, certain general principles of a wireless communication system and mobile communication devices are briefly explained with reference to Figure 1, Figure 2 and Figure 3 to assist in understanding the technology underlying the described examples.

An example of a suitable communications system is the 5G or NR concept. Network architecture in NR may be similar to that of LTE-advanced. Base stations of NR systems may be known as next generation NodeBs (gNBs). Changes to the network architecture may depend on the need to support various radio technologies and finer Quality of Service (QoS) support, and some on-demand requirements for e.g. QoS levels to support Quality of Experience (QoE) for a user. Also network aware services and applications, and service and application aware networks may bring changes to the architecture. Those are related to Information Centric Network (ICN) and User-Centric Content Delivery Network (UC-CDN) approaches. NR may use Multiple Input - Multiple Output (MIMO) antennas, many more base stations or nodes than the LTE (a so-called small cell concept), including macro sites operating in co-operation with smaller stations and perhaps also employing a variety of radio technologies for better coverage and enhanced data rates.

Future networks may utilise network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Deployments may be cloud-native network function (CNF) based, where network functions comprise one or more pods. Cloud computing or data storage may also be utilized. In radio communications this may mean node operations are to be carried out, at least partly, in a server, host or node operationally coupled to a remote radio head. It is also possible that node operations will be distributed among a plurality of servers, nodes or hosts. It should also be understood that the distribution of labour between core network operations and base station operations may differ from that of LTE or may even be non-existent.

Figure 1 shows a schematic representation of a 5G system (5GS) 100. The 5GS may comprise a user equipment (UE) 102 (which may also be referred to as a communication device or a terminal), a 5G radio access network (5GRAN) 104, a 5G core network (5GCN) 106, one or more internal or external application functions (AF) 108 and one or more data networks (DN) 110.

An example 5G core network (CN) comprises functional entities. The 5GCN 106 may comprise one or more Access and mobility Management Functions (AMF) 112, one or more session management functions (SMF) 114, an authentication server function (AUSF) 116, a Unified Data Management (UDM) 118, one or more user plane functions (UPF) 120, a Unified Data Repository (UDR) 122 and/or a Network Exposure Function (NEF) 124. The UPF is controlled by the SMF (Session Management Function) that receives policies from a PCF (Policy Control Function).

The CN may be connected to a UE via the Radio Access Network (RAN) or through fixed access via a non-3GPP Interworking Function (N3IWF). The 5GRAN may comprise one or more gNodeB (gNB) Distributed Unit (DU) functions connected to one or more gNodeB (gNB) Centralized Unit (CU) functions. The RAN may comprise one or more access nodes.

A User Plane Function (UPF) referred to as PDU Session Anchor (PSA) may be responsible for forwarding frames back and forth between the DN and the tunnels established over the 5G towards the UE(s) exchanging traffic with the DN.

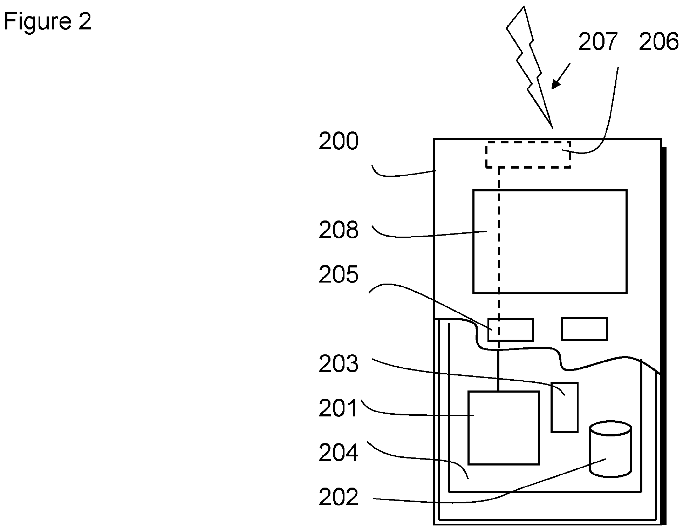

A possible mobile communication device will now be described in more detail with reference to Figure 2 showing a schematic, partially sectioned view of a communication device 200. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, voice over IP (VoIP) phones, portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), smart devices, wireless customer-premises equipment (CPE), or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts, and other information.

A mobile device is typically provided with at least one data processing entity 201, at least one memory 202 and other possible components 203 for use in software and hardware aided execution of tasks it is designed to perform, including control of access to and communications with access systems and other communication devices. The data processing, storage and other relevant components can be provided on an appropriate circuit board and/or in chipsets. This feature is denoted by reference 204. The user may control the operation of the mobile device by means of a suitable user interface such as key pad 205, voice commands, touch sensitive screen or pad, combinations thereof or the like. A display 208, a speaker and a microphone can be also provided. Furthermore, a mobile communication device may comprise appropriate connectors (either wired or wireless) to other devices and/or for connecting external accessories, for example hands-free equipment, thereto.

The mobile device 200 may receive signals over an air or radio interface 207 via appropriate apparatus for receiving and may transmit signals via appropriate apparatus for transmitting radio signals. In Figure 2 transceiver apparatus is designated schematically by block 206. The transceiver apparatus 206 may be provided for example by means of a radio part and associated antenna arrangement. The antenna arrangement may be arranged internally or externally to the mobile device.

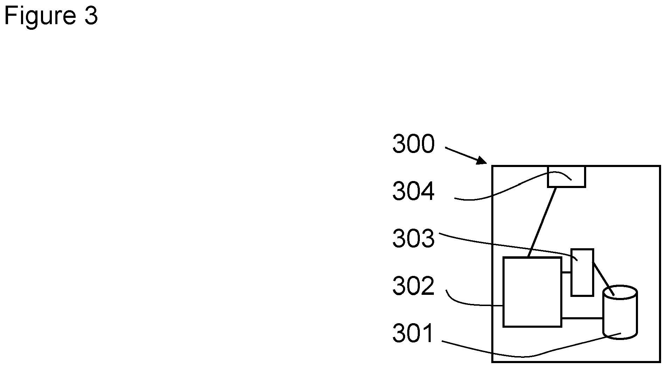

Figure 3 shows an example of a control apparatus 300 for a communication system, for example to be coupled to and/or for controlling a station of an access system, such as a RAN node, e.g. a base station, eNB or gNB, a relay node or a core network node such as an MME or Serving Gateway (S-GW) or Packet Data Network Gateway (P-GW, or a core network function such as AMF/SMF, or a server or host. The method may be implemented in a single control apparatus or across more than one control apparatus. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. In some embodiments, each base station may have such a control apparatus as well as a control apparatus being provided in a radio network controller. The control apparatus 300 can be arranged to provide control on communications in the service area of the system. The control apparatus 300 comprises at least one memory 301, at least one data processing unit 302, 303 and an input/output interface 304. Via the interface the control apparatus can be coupled to a receiver and a transmitter of the base station. The receiver and/or the transmitter may be implemented as a radio front end or a remote radio head.

In a Time-Division-Duplexed (TDD) system, the radio spectrum is divided into alternating time slots for uplink (UL) and downlink (DL) communication. In TDD systems, SSBs may serve as primary reference signals for synchronization and cell search procedures, enabling user equipment (UE) to identify and connect to nearby base stations (gNBs) with subsequent PRACH transmission from the UE.

In a single-TRP scenario, SSBs are periodically transmitted during specific downlink time and frequency slots, providing synchronization information to UEs. UEs synchronize themselves with the gNB by detecting and decoding the received SSBs corresponding to the intended gNB.

In a multi-TRP scenario, the complexity increases as different TRPs may transmit their own set of SSBs during designated DL time slots. To ensure that UEs can distinguish between SSBs from different TRPs, orthogonal resources are used, and UEs are equipped to identify SSBs from various TRPs and synchronize with the intended TRP based on the detected SSBs.

PRACH transmission allows UEs to initiate communication with a gNB. In a TDD system, where the UL-DL configuration may vary periodically, it's essential for UEs to know when and where to transmit their PRACH preambles. In a single-TRP scenario, UEs employ PRACH resources corresponding to DL time slots associated with sufficiently high-quality SSB transmissions, allowing the gNB to estimate the UL channel and to establish further communication. UEs align their PRACH transmissions with the gNB's configuration to ensure their PRACH preambles are transmitted during the appropriate UL time slots when the gNB is listening.

In multi-TRP scenario, to determine which TRP they want to communicate with, UEs may perform measurements or receive synchronization signals from multiple TRPs. Once the appropriate TRP is determined, UEs transmit PRACH messages in synchronization with that TRP's UL time slots associated with the received SSB. However, in the case of multiple TRPs transmitting the SSBs in a single frequency network (SFN), the UE PRACH preamble is associated with a certain SSB (and not necessarily with any particular TRP).

During SSB reception, UEs align themselves with a single SSB, which may ensure accurate synchronization and connection establishment. However, this single-SSB association during PRACH transmission may influence, or limit, uplink (UL) coverage. Where multiple SSBs or TRPs signals have good quality, this may offer improved capacity or coverage. UEs may have restricted flexibility in utilizing PRACH resources of multiple SSBs from a single or multiple TRPs, potentially constraining UL coverage.

Each SSB may have multiple associated PRACH transmission occasions (time/frequency resource where the PRACH is found if the associated SSB is selected by the UE). The current 5G standard mandates a single SSB association for UEs during PRACH transmission. Addressing this limitation may involve further refinements and enhancements in future iterations of the 3GPP standard.

In general, UEs face limitations when associating with a single TRP or multi-TRP, where the UE associates with single SSB during the PRACH transmission and the UE will not fully exploit all the received SSB information for the initial access. This constraint can have adverse effects on coverage during the PRACH transmissions.

To enhance UL coverage, UE transmission, including PRACH transmissions, may be aligned with multiple SSBs from a single or multiple TRPs. Achieving this entails improving resources in the uplink for PRACH transmission. Enhancements in the precoding strategy utilized by UEs for PRACH transmissions may be required for a multi-SSB association to function effectively.

The following is related to UE implementation of PRACH transmission/beamforming/precoding design based on multiple SSB signals, network indication of the uplink transmission (precoding) type of the PRACH transmission to the UE and providing the resource information to the UE for the uplink PRACH transmission for different types.

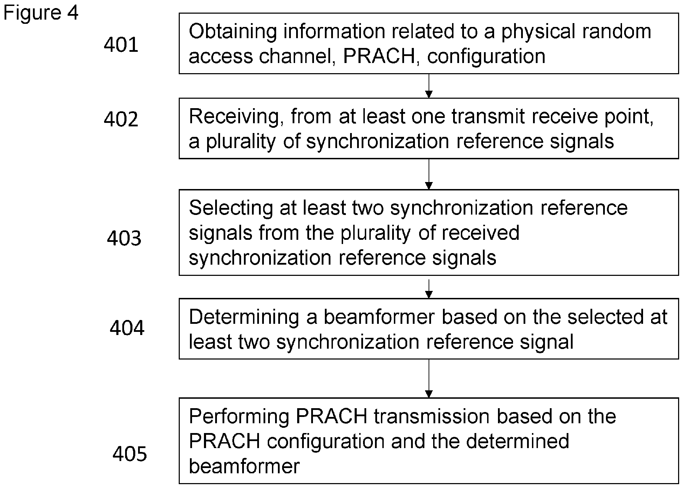

Figure 4 shows a flowchart of a method according to an example embodiment.

At 401 the method comprises obtaining information related to a physical random access channel, PRACH, configuration.

At 402, the method comprises receiving, from at least one transmit receive point, a plurality of synchronization reference signals.

At 403, the method comprises selecting at least two synchronization reference signals from the plurality of received synchronization reference signals.

At 404, the method comprises determining a beamformer based on the selected at least two synchronization reference signal.

At 405, the method comprises performing PRACH transmission based on the PRACH configuration and the determined beamformer.

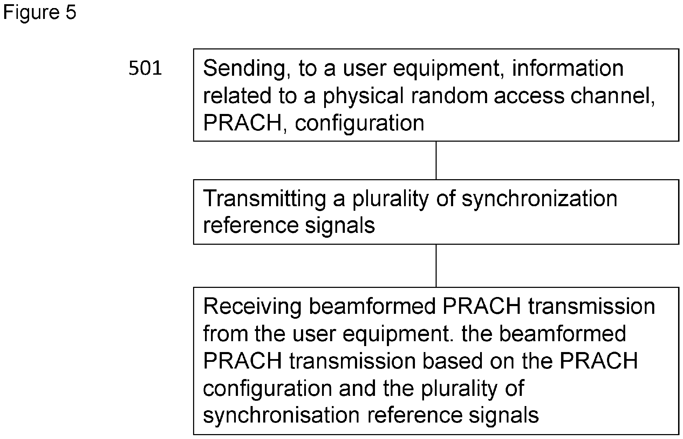

Figure 5 shows a flowchart of a method according to an example embodiment. The method may be performed at a network entity. The network entity may be a transmit receive point (TRP), such as a base station (BS) or a remote antenna. A base station may include but is not limited to 5G node, 6G node, etc.

At 501, the method comprises sending, to a user equipment, information related to a physical random access channel, PRACH, configuration.

At 502, the method comprises transmitting, from at least one transmit receive point, a plurality of synchronization reference signals.

At 503, the method comprises receiving beamformed PRACH transmission from the user equipment, the beamformed PRACH transmission based on the PRACH configuration and the plurality of synchronisation reference signals.

The synchronisation signal may comprise a synchronisation signal block (SSB) or similar reference signals that are associated to certain PRACH preambles. The term SSB is used in the specific examples below.

The methods described herein with reference to Figures 4 and 5 may enable UE beamforming for the PRACH preamble transmission based on multiple SBBs (which may be from multiple TRPs or a single TRP) utilized for the PRACH preamble detection in the cell or across cells. If a UE can detect multiple high quality SSBs from a single or multiple TRPs during the DL, the UE may utilize this information to improve the UL PRACH transmission. This may enhance preamble detection performance in the network side.

In an example embodiment, the information related to the PRACH configuration may be provided in a system information block 1 (SIB1)

In an example embodiment, a UE detects PSS/SSS and PBCH of a cell. The UE reads from PBCH the parameters based on which it can start monitoring PDCCH that would schedule PDSCH carrying SIB1. Upon reception of PDSCH carrying SIB1, UE reads PRACH configuration from SIB1.

The information related to the PRACH configuration may comprise an indication that PRACH transmission is to be based on at least one of the following: two or more synchronization reference signals, a first signal condition, or a second signal condition.

The information related to the PRACH configuration may comprise an indication of the first signal condition or the second signal condition.

For example, a base station may indicate whether or not a UE may perform transmit beamforming based on one or more received SSBs. The PRACH configuration may include at least an indication that the UE can perform UL beamforming for PRACH preamble based on reception of multiple SSBs.

The first signal condition and the second signal condition may be used by the UE to determine which of the synchronization reference signals of the received synchronization reference signals to use to determine the beamformer for the PRACH preamble.

The first signal condition may comprise a received signal quality threshold, e.g., a RSRP threshold.

The first signal condition may comprise a RSRP threshold above which the PRACH transmission based on multiple high quality SSBs can be used.

The network may decide the value of the RSRP threshold based on, e.g., pathloss, for which UE PRACH cannot be detected based on PRACH targeting to a single SSB.

Alternatively, or in addition, the first signal condition (e.g., RSRP threshold level) may be UE implementation specific or predetermined.

Selecting at least two synchronization reference signals may comprise selecting at least one of the at least two synchronization reference signals from the plurality of received reference signals based on the first signal condition. Alternatively, or in addition, selecting at least two synchronization reference signals may comprise selecting at least one of the at least two synchronization reference signals from the plurality of received reference signals with the best, or highest, received signal quality (e.g., RSRP).

The second signal condition may comprise a received signal quality range (e.g., an RSRP range). Selecting at least two synchronization reference signals may comprise selecting a first synchronisation reference signal which has a highest received signal quality, and/or a received signal quality which meets the first signal condition, and at least one second synchronisation reference signal having a received signal quality within the received signal quality range of the highest received signal quality.

In certain example embodiment, the at least two selected synchronisation reference signals may each have a received signal quality which meets the first signal condition.

In an example embodiment, the RSRP range is used to determine the multiple SSBs based on the best detected SSB (i.e., the SSB with the highest received signal quality).

In an example, the RSRP values of the selected SSBs have to be within the configured quality range (e.g., within X dBs). In one example, the highest quality SSB may be selected and any SSB (multiple high quality) selected have to be within quality range of the selected highest quality SSB.

In an example embodiment, multiple occasions may be used to transmit multiple uplink PRACH, as associated with the multiple SSBs. Furthermore, SSBs may be grouped by the UE, and any SSB group is then covered by a single PRACH transmission (for example, if there are three SSBs {1 ,2,3}, the UE can choose to group them as {1,2} and {3}, and transmit two PRACH transmissions, beamformed respectively toward {1,2} and {3}).

In an example embodiment, the UE determines from RACH configuration the grouping of SSBs, measures the sets of grouped SSBs and determines a beamformer for the PRACH preamble transmission based on the SSBs of one group.

The information related to the PRACH configuration may comprise an indication of PRACH transmission type, wherein the type defines whether a single or multiple PRACH transmissions target to directions of the at least two synchronization reference signals.

In an example embodiment, one PRACH transmission type is a single PRACH transmission targeting to multiple SSB directions. For this example, the UE transmits to multiple SSB directions using a single PRACH, for this the UE needs to compute a single beamformer suitable to all the SSBs.

Another example PRACH transmission type is multiple PRACH transmissions on orthogonal resources targeting multiple SSB directions. In this example, the UE transmits PRACH targeting to a single SSB direction using the beamformer obtained from the reference signal of that SSB.

The information related to the PRACH configuration may comprise a resource indication for single or multiple PRACH transmissions. There may be multiple one or multiple RACH occasions multiplexed in frequency and time domain that have PRACH preambles associated to a certain set (group) of SSBs,

The information related to the PRACH configuration may comprise an indication of at least one association between a set of random access preambles and a set of synchronization reference signals and the apparatus may comprise means for determining a random access preamble for PRACH transmission based on the received indication, with groups of SSBs sharing the same preamble set.

For example, where multiple SSBs may be used to determine the UE beamformer, the PRACH configuration may indicate a grouping of SSBs that share the same preamble set and based on which the UE can estimate the beamformer for the PRACH preamble transmission.

The RACH configuration may also include separation of preambles associated to a set of SSBs to different sets of preambles. For example, one set of preamble is common for all SSBs, i.e. the ones from which the UE selects preamble for the transmission if the UE performs beamformer based on at least two of the SSBs of the set of SSBs and the other sets are specific to certain SSBs of the set of the SSBs, i.e. the ones from the UE selects preamble for the transmission if the UE performs beamformer based on one of the certain SSBs of the set of the SSBs.

The information related to the PRACH configuration may comprise a number of PRACH transmissions.

A number of PRACH transmissions may comprise a maximum number of PRACH transmission occasions. This may be used determine the maximum number of PRACH transmissions targeting to multiple SSBs, or a single SSB direction in different occasion.

The information related to the PRACH configuration may comprise an indication of the UE precoding design for PRACH transmission. UE needs to design the precoder based on the PRACH transmission type. This can be UE implementation specific, for example UE can design the precoder by aggregating multiple channels from different SSBs and find a precoder corresponding to the maximum singular value.

The plurality of synchronization reference signals may be received from one transmit receive point. For example, the SSBs may be transmitted as a time domain sweep (multiple subsequent SSBs transmitted in time domain one after the other) from a single TRP.

Alternatively, or in addition, the plurality of synchronization reference signals may be received from a plurality of transmit receive points. The plurality of synchronization reference signals may comprise the same synchronization reference signal received from a plurality of directions corresponding to the plurality of transmit receive points or multiple synchronization reference signals received from the plurality of directions.

In one example scenario, for multiple TRPs, each TRP transmits the same time domain SSB sweep at the same time. This is known as a single frequency network (SFN) manner of operation. The UE will see 'a single SSB' arriving from multiple directions at any given time during the sweep.

In one example scenario, for multiple TRPs, each TRP transmits its individual sweep of SSBs, i.e., the SSBs can have different information and can be considered as different reference signals, but the sweeps still happen at the same time. In this mode, the UE can receive and separate multiple different SSBs, from multiple different directions, at any given time during the sweep.

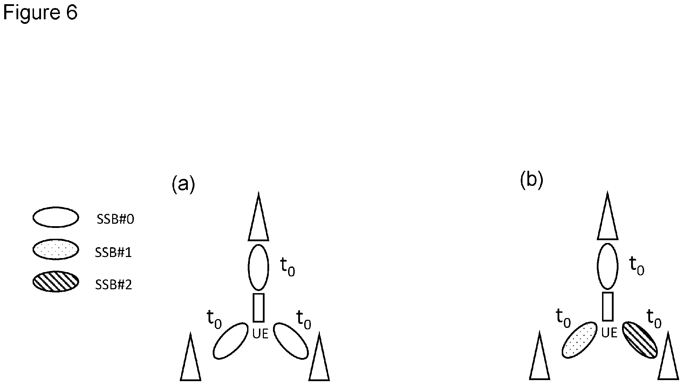

Cell with multiple TRPs may operate in different ways as illustrated in Figures 6a and 6b.

SSBs may be transmitted in SFN manner from all the TRPs as shown in Figure 6a or SSBs may be transmitted per TRP, i.e., a SSB from a TRP is different from a SSB from another TRP as shown in Figure 6b.

In an example embodiment, a UE detects and receives multiple SSBs. UE determines the best or good enough set of SSBs, e.g., based on a threshold (e.g., a first signal condition). In an example embodiment, the UE may determine the set by selecting the "best" SSB (e.g., the SSB with the highest received signal quality) and determining the other SSBs of the set based on whether they are within a RSRP range (e.g., a second signal condition) of the best SSB.

UE determines the beamformer based on the set of SSBs determined above.

The UE may compute the effective channel information related to each SSB from the DMRS.

In the example embodiment, the UE transmits PRACH preamble corresponding to the selected set of SSBs and using transmit beamformer determined as above.

The uplink PRACH transmissions may happen in the following example ways:
Performing PRACH transmission may comprise performing multiple PRACH transmissions with at least one of time domain multiplexing, frequency domain multiplexing, or code domain multiplexing.

For example, a UE may transmit PRACH transmissions with time domain multiplexing, cycling through the selected SSBs (or SSB groups) in sequence.

Alternatively, or in addition, a UE may transmit PRACH transmissions with frequency domain multiplexing, where each SSB (or SSB group) has a corresponding resource set in frequency domain. These frequency multiplexed resources have different UE beamformers that correspond to the associated SSBs/directions.

PRACH transmission may be performed based on a combination of time domain multiplexing and frequency domain multiplexing, as long as the resource elements for different PRACH transmissions are separate. Each PRACH is beamformed toward its corresponding selected SSB (or SSB group)/direction.

A UE may transmit overlapped PRACH transmissions on the same time/frequency resources, separated in both code and spatial domain (i.e., different PRACH preambles, while also beamformed toward their respective selected SSBs (or SSB groups)/directions).

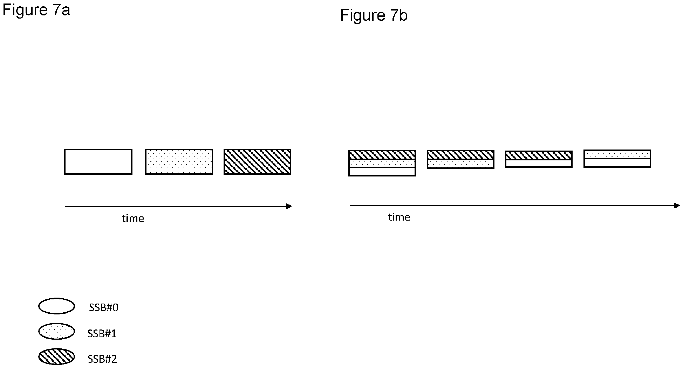

Figure 7a shows an example where a UE determines an UL beamformer based on a single SSB per time instance (SSB#0 in a first time instance, SSB#1 in a second time instance and SSB#2 in a third time instance, as illustrated by the shading)

Figure 7b shows an example where the UE determines UL beamformer jointly based on up to 3 SSBs per time instance (SSB#0, SSB#1 and SSB#2 in the first time instance; SSB#2 and SSB#1 in a second time instance; SSB#2 and SSB#0 in a third time instance and SSB#0 and SSB#1 in a fourth time instance, as illustrated by the shading).

Performing PRACH transmission may comprises performing a single PRACH transmission to the directions of the at least two synchronization reference signals.

For example, in a single frequency network, a single PRACH transmission might target multiple different directions.

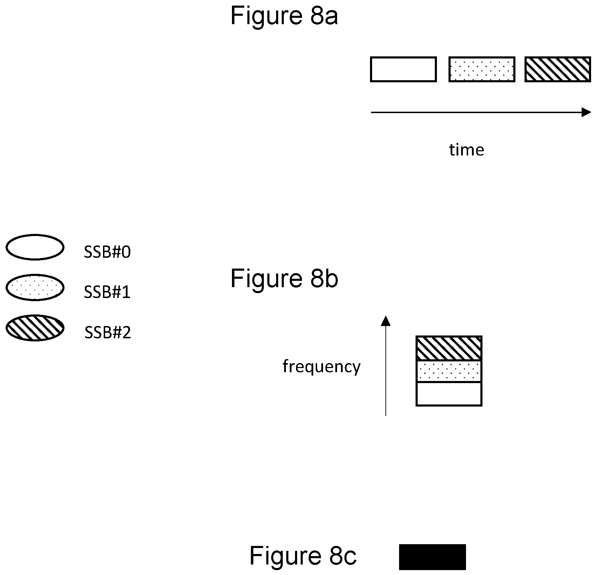

For the fully digital BS (receiver) implementation, RACH occasions (and preambles in the ROs) may not be associated with SSBs. Therefore, the preambles can be pooled, and a UE can choose any preamble from the pool and design the precoder based on the determined set of the received SSBs to transmit it associated with a single PRACH occasion as shown in the figure 8c.

ROs can be allocated in time and frequency as illustrated in Figures 8a, 8b and 8c.

In Figure 8a, the ROs are allocated in time with the RO comprising preambles associated with SSB#0, SSB#1 and SSB#2, as illustrated by the shading.

In Figure 8b, the ROs are allocated in frequency with the RO comprising preambles associated with SSB#0, SSB#1 and SSB#2, as illustrated by the shading.

In Figure 8c, the RO comprises a single preamble towards the directions of SSB#0, SSB#1 and SSB#2.

In the methods described herein, the random access response (RAR) message may be detected at the UE based on the precoder used for the PRACH transmission or, if the UE is fully digital, the UE may use any combiner to decode the RAR message.

Coordination of SSB transmission and PRACH association may be useful for establishing and maintaining connections in a TDD-based 5G NR system. For 6G systems operating on frequency range 3, the UEs may have multiple antennas to improve the coverage with fully digital operation. Therefore, at the UE, the beamforming based on the CSI acquired from multiple SSB transmissions can be utilized to improve the UL coverage during the PRACH transmission.

Methods as described above may improve PRACH preamble detection performance in the cell through the utilization of multiple SSBs from a single or multiple TRPs for signal enhancement. In other words, more optimum UL TX beamformer can be built that utilizes multi-SSB reception capability of the cell.

This may have positive impact on initial access latency the UE experiences. Also, this reduces collisions or allows network to reduce the RACH resources in general and allocate resources for dedicated downlink and uplink resources (for actual data traffic)

Methods described herein may provide network flexibility to operate multi-TRP scenarios in different ways, and allow utilization of multi-SSB high digital degree processing for the PRACH reception

Channel state information (or RSSI) is obtained between the UE and multiple TRPs during the initial access procedure (SSB, PRACH, etc.), which can be utilized for initial beamforming design.

Method may increase network efficiency by fully utilizing the available aggregated CSI for optimized precoder and combiner design.

An apparatus may comprise means for obtaining information related to a physical random access channel, PRACH, configuration, receiving, from at least one transmit receive point, a plurality of synchronization reference signals, selecting at least two synchronization reference signals from the plurality of received synchronization reference signals, determining a beamformer based on the selected at least two synchronization reference signal and performing PRACH transmission based on the PRACH configuration and the determined beamformer.

The apparatus may comprise a UE as described with reference to Figure 2, be the UE or be comprised in the UE or a chipset for performing at least some actions of/for the UE.

An apparatus may comprise means for sending, to a user equipment, information related to a physical random access channel, PRACH, configuration, transmitting a plurality of synchronization reference signals and receiving beamformed PRACH transmission from the user equipment, the beamformed PRACH transmission based on the PRACH configuration and the plurality of synchronisation reference signals.

The apparatus may comprise a network entity as described with reference to Figure 2 or a network function or node such as, but not limited to gNB, CN, OAM or LMF , or a chipset for performing at least some actions of/for the network entity, network function or node.

In an embodiment, the apparatus comprising a network function refers to a device/apparatus which is configured to perform or performs at least part of functionalities of the network function or to a device/apparatus which comprises circuitry (e.g., chipset) configured to perform or performing at least part of functionalities of the network function.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems such as 6G networks or 5G-Advanced networks. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media. The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

## Claims

1. An apparatus comprising means for:
obtaining information related to a physical random access channel, PRACH,
configuration;
receiving, from at least one transmit receive point, a plurality of synchronization reference signals;
selecting at least two synchronization reference signals from the plurality of received synchronization reference signals;
determining a beamformer based on the selected at least two synchronization reference signal; and
performing PRACH transmission based on the PRACH configuration and the determined beamformer.

2. The apparatus according to claim 1, wherein the information related to the PRACH configuration comprises an indication of at least one association between a set of random access preambles and a set of synchronization reference signals and the apparatus comprises means for determining a random access preamble for PRACH transmission based on the received indication.

3. The apparatus according to claim 1 or claim 2, wherein the information related to the PRACH configuration comprises an indication that PRACH transmission is to be based on at least one of the following: two or more synchronization reference signals, a first signal condition, or a second signal condition.

4. The apparatus according to claim 3, wherein the first signal condition comprises a received signal quality threshold.

5. The apparatus according to claim 3 or claim 4, wherein the means for selecting at least two synchronization reference signals comprises means for selecting at least one of the at least two synchronization reference signals from the plurality of received reference signals based on the first signal condition.

6. The apparatus according to any of claims 3 to 5, wherein the second signal condition comprises a received signal quality range and the means for selecting at least two synchronization reference signals comprises means for selecting a first synchronisation reference which has a highest received signal quality and at least one second synchronisation reference signal having a received signal quality within the received signal quality range of the highest received signal quality.

7. The apparatus according to any of claims 1 to 6, wherein the information related to the PRACH configuration comprises an indication of PRACH transmission type, wherein the type defines whether a single or multiple PRACH transmissions target to directions of the at least two synchronization reference signals.

8. The apparatus according to claim 7, wherein the means for performing PRACH transmission comprises means for performing multiple PRACH transmissions with at least one of time domain multiplexing, frequency domain multiplexing, or code domain multiplexing.

9. The apparatus according to claim 7, wherein the means for performing PRACH transmission comprises means for performing a single PRACH transmission to the directions of the at least two synchronization reference signals.

10. The apparatus according to any of claims 1 to 9, wherein the information related to the PRACH configuration comprises a number of PRACH transmissions.

11. The apparatus according to any of claims 1 to 10, wherein the plurality of synchronization reference signals is received from one transmit receive point.

12. The apparatus according to any of claims 1 to 10, wherein the plurality of synchronization reference signals is received from a plurality of transmit receive points, wherein the plurality of synchronization reference signals comprises the same synchronization reference signal received from a plurality of directions corresponding to the plurality of transmit receive points or multiple synchronization reference signals received from the plurality of directions.

13. The apparatus according to any of claims 1 to 12, wherein the synchronization reference signal comprises a synchronisation signal block.

14. A method comprising:
obtaining information related to a physical random access channel, PRACH, configuration;
receiving, from at least one transmit receive point, a plurality of synchronization reference signals;
selecting at least two synchronization reference signals from the plurality of received synchronization reference signals;
determining a beamformer based on the selected at least two synchronization reference signal; and
performing PRACH transmission based on the PRACH configuration and the determined beamformer.

15. A computer readable medium comprising instructions which, when executed by an apparatus, cause the apparatus to perform at least the following:
obtaining information related to a physical random access channel, PRACH, configuration;
receiving, from at least one transmit receive point, a plurality of synchronization reference signals;
selecting at least two synchronization reference signals from the plurality of received synchronization reference signals;
determining a beamformer based on the selected at least two synchronization reference signal; and
performing PRACH transmission based on the PRACH configuration and the determined beamformer.

16. An apparatus comprising means for:
sending, to a user equipment, information related to a physical random access channel, PRACH, configuration;
transmitting a plurality of synchronization reference signals; and
receiving beamformed PRACH transmission from the user equipment, the beamformed PRACH transmission based on the PRACH configuration and the plurality of synchronisation reference signals.
